# EUROPEAN PATENT SPECIFICATION

(11) **EP 0 445 019 B1**
(45) Date of publication and mention of the grant of the patent: **22.03.1995**
(21) Application number: 91400508.7
(22) Date of filing: 25.02.1991
(51) Int. Cl.: G10K 11/16, G01V 1/20

(54) **Acoustic vibration reduction**
Akustische Schwingungsverminderung
Diminuation des vibrations acoustiques

(30) Priority: 27.02.1990 AU 8859/90
(43) Date of publication of application: 04.09.1991
(73) Proprietor: THOMSON-CSF, 75008 Paris (FR)
(72) Inventor: Carpenter, Allan Lloyd, F-92045 Paris la Défense (FR)
(74) Representative: Desperrier, Jean-Louis

(56) References cited:
- EP-A- 0 100 583
- WO-A-83/00564
- WO-A-87/03379
- FR-A- 2 626 710
- US-A- 4 241 427
- US-A- 4 295 212
- US-A- 4 402 069

## Description

The present invention relates to acoustic vibration reduction and, in particular, to the reduction of the transmission of axial mechanical vibrations in a multistrand tensile load bearing member.

Such load bearing members are used in acoustic arrays which are towed behind marine vessels. Such an array consists of a number of hydrophones or other acoustic transducers which are designed to detect sound waves transmitted through water, normally sea water. Because the acoustic array is itself moving through the water with a velocity, there is a relatively large amount of noise generated by the array itself. The object of the present invention is to reduce the level of this noise so as to effectively increase the signal to noise ratio of the hydrophones.

The tensile load bearing members are normally made from Aramid fibres better known as KEVLAR (Registered Trade Mark). Such Aramid fibres have excellent mechanical properties. Typically, the material is formed into ends or strands which are braided or plaited or laid in order to form the braided tensile load bearing member. Whilst this member is very strong, and has other desirable attributes, the very high Young's Modulus and low Loss Tangent (i.e. internal damping) provide an ideal path for the transmission of mechanical vibrations with very little attenuation along the length of member. The present invention seeks to reduce this transmission whilst still retaining the desirable mechanical advantages of KEVLAR, particularly in relation to its load bearing strength.

In accordance with one aspect of the present invention there is disclosed an acoustic array adapted to be towed behind a vessel, said array comprising a plurality of lines, each of said lines being strengthened by at least one multistrand tensile load carrying member formed from a plurality of strands each of which is composed of Aramid fibres and individually coated with a layer of vibration damping material before fabrication of said load carrying member.

According to a second aspect of the present invention there is disclosed a multistrand tensile load carrying member formed from a plurality of strands each of which is composed of Aramid fibres and is individually coated with a layer of vibration damping material before fabrication of said load carrying member.

In accordance with a third aspect of the present invention there is disclosed a method of reducing transmission of axial mechanical vibrations in a multistrand tensile load bearing member, said method comprising the step of individually coating each strand of the member, with a coating of high loss tangent material before fabrication of said member and wherein each said strand is formed from a plurality of Aramid fibres.

An embodiment of the present invention will now be described with reference to the drawings in which :
Fig. 1 is a plan view of an acoustic array being towed behind a vessel,
Fig. 2 is a side elevational view of the apparatus of Fig. 1,
Fig. 3 is a cross-sectional view along the line III-III of Fig. 2 which schematically represents the internal structure of the array members,
Fig. 4 is a cross-sectional view through a prior art braided tensile load bearing member,
Fig. 5 schematically represents in side elevation the braided ends of the tensile load bearing member of the preferred embodiment, and
Fig. 6 is a cross-sectional view through the braided tensile load bearing member of the preferred embodiment being both an enlargement of a portion of Fig. 4 and a cross-section along the line VI-VI of Fig. 5.

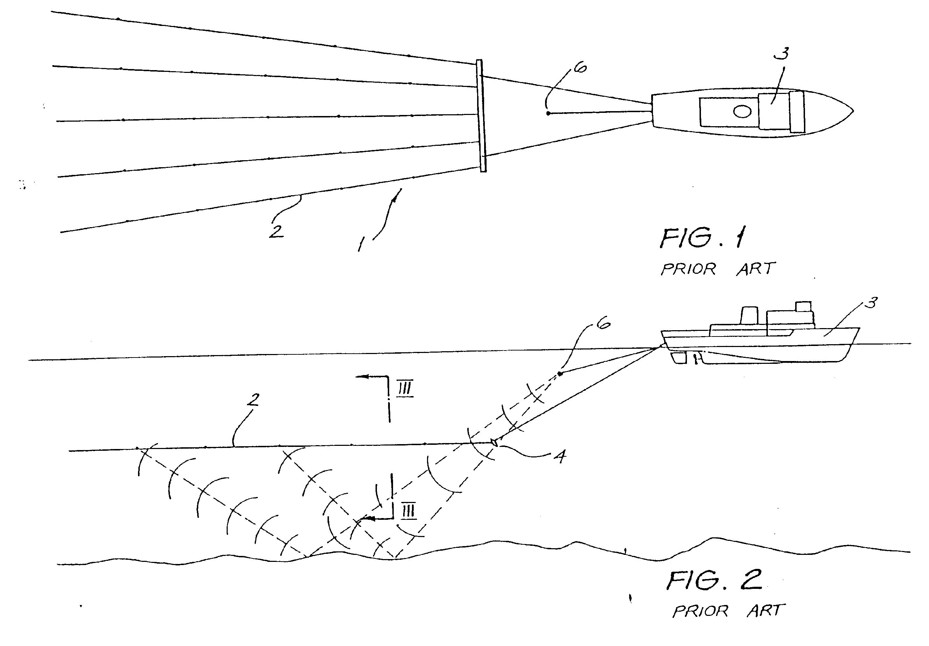

As seen in Figs. 1 and 2, an acoustic array 1, formed from a number of generally parallel lines 2, is towed behind a vessel 3. Each of the lines 2 is from 2 to 5 km in length and is maintained at a depth of approximately 100 metres by means of a hydroplane 4. Spaced at accurately known, regular intervals along each of the lines 2 is a plurality of hydrophones 5. In seismic prospecting activities, the hydrophones 5 detect acoustic signals reflected from the seabed or underlying geological strata, and emitted by an acoustic source 6. Such arrays also find military applications, for example in submarine detection. US Patents Nos. 4,491,939 (Carpenter) ; 4,525,813 (Burrage) and 4, 597,065 (Lieu et al) exemplify the prior art in this field.

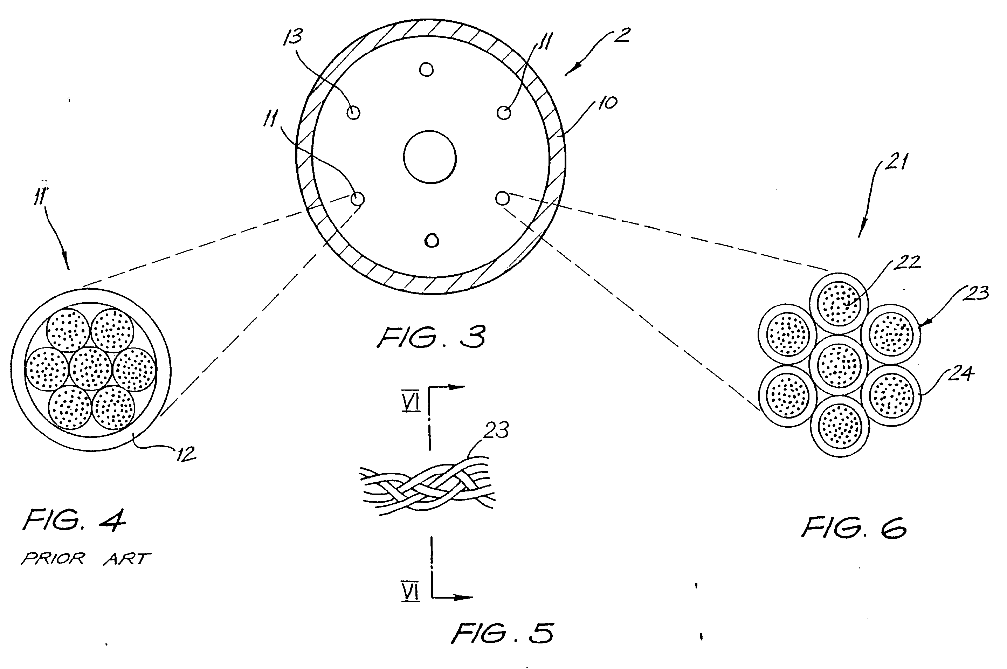

As illustrated in Fig. 3, each of the lines 2 takes the form of a tube 10 into the hollow interior of which the hydrophones 5 are located. Within the tube 10, and around the hydrophones 5, are located a plurality of tensile load bearing members 11 and data cables 13. The tube 10 is typically filled with a low density fluid to ensure substantially neutral buoyancy of the complete assembly.

As illustrated in Fig. 4, the prior art form of tensile load bearing member 11 comprises a number of individual filaments or ends formed from KEVLAR which were bunched together to form strands . The strands were then plaited or braided in order to form the load carrying braid. In order to reduce the noise transmitted by the braid itself, the braid after being braided, was then coated with an outer jacket 12 formed from a high loss tangent material which effectively damps vibrations. The coating also provided a number of practical advantages, in particular KEVLAR is highly abrasive and therefore if the KEVLAR braid is coated this assists in moving the braid over pulley wheels and the like. In addition, KEVLAR is hygroscopic and therefore such a coating tends to overcome the problem of the KEVLAR absorbing moisture.

The braid also has the advantage that the intertwined strands of KEVLAR, when a tensile load is applied, interlock with each other and therefore provide a substantial safety measure against one or more of the individual ends within a strand failing.

It will be appreciated that the fabrication of such tensile load bearing members is very different from the fabrication of electric cables. Different considerations apply in relation to electrical cables since the individual wires in such cables lie alongside each other rather than being braided or plaited or laid as in a rope. The wires in an electric cable lie alongside each other in order to reduce cross-over distortion and also to remove the likelihood of short circuits developing between the individual wires within the cable. Furthermore, the wires in such cables do not have to withstand large tensile loads.

Unfortunately, although the above described prior art member 11 is satisfactory from the point of view of transmission of mechanical load, the member 11 is not of assistance in the reduction of mechanical noise. A reason for this is that one of the predominant mechanisms for the axial transmission of mechanical noise is by longitudinal vibration of the KEVLAR strength members 11 themselves.

Mechanical noise or vibration is transmitted through hydrophone array structures by a variety of mechanisms depending on the particular array structure concerned. Fluid or semi-solid fills can be excited to produce "bulge waves" that travel within the structure, reflecting and scattering from any internal discontinuities. Such noise transmission mechanisms are reduced by designing "clean" internal configurations. Excitations created locally by phenomena such as boundary layer turbulence are transmitted through the outer jacket 12 and both radiated into the interior of the tube 10, and conducted along the members 11 (and the outer jacket 12 itself to some extent). Such transmitted vibration is subsequently radiated into downstream or upstream internal spaces. Any such transmission of noise into the internal spaces in which the array hydrophones 5 are housed, must reduce the system's signal to noise ratio and hence degrade the system's resultant acoustic performance.

Various efforts have been made over the years to reduce noise. US Patent No. 4,660,183 (McGowan et al) discloses various vibration isolation mechanisms which do not address the problem of vibration in the strength members themselves. Similarly, US Patent No. 4,685,090 (Crevnor) addresses the radial propogation of noise through the array skin and hence to the acoustic sensor whilst US Patent 4,733,379 (Lapetina et al) is concerned with the minimising of pressure and acoustic fluctuations within a rigid transducer. Finally US Patent 4,809,243 (Bledsoe et al) jackets the entire strength member as described above in relation to Fig. 4.

Unfortunately, the material properties of KEVLAR provide an ideal medium for the transmission of mechanical vibrations with very little attentuation. Whilst the braided structure of the members 11 offer some potential for reducing this transmission, in that the angled lay of individual fibres or ends, provides a mechanism for dispersing some part of the transmitted vibration into the surrounding medium, such as the high loss exterior coating 12 around the braid, it has been found in practice that very little reduction results. As a consequence, the transmission of mechanical noise along the strength members 11 therefore remains as a major limit to the performance of the acoustic array.

The abovementioned problems are substantially reduced by the improved load bearing member 21 illustrated in Figs. 5 and 6. Here the individual ends 22 are again bunched into strands 23, however, the strands 23 are each coated with a coating 24 of high damping material prior to the braided member 21 being fabricated by braiding or plaiting or laying as in the manufacture of a rope. It will be appreciated in this connection that Fig. 6 is equally applicable to all three types of fabrication methods. The high damping material typically comprises extrusion grade EVA (ethylene vinyl acetate) for example, NIPPOFLEX #760 or TPR (thermoplastic rubber) for example IMPRODEX Z150/34. These preferred high damping materials are sold in Australia by ICI Australia Limited and the Improdex Products Division of Dunlop Australia respectively.

It has been found that such a structure provides an unexpectedly high effective damping of axially transmitted vibrations. It is thought that this comes about because the structure provides a configuration whereby the angled strands 23 (that is bunched groups of individual fibres) are separated from one another by the high loss material of the coating 24. When this configuration is subjected to axial tension, then distortion of the coating between the individual strands 23 results. Since mechanical vibrations are transmitted by providing alternating tension and compression in the strength member 21 (superimposed on the basic tension of the towing load) it is thought that the abovementioned structure creates a mechanism for the effective repetitive distortion of the high loss material of the coating 24 and thereby provides a mechanism for the effective damping of axially transmitted vibrations.

An unexpected advantage of the abovementioned arrangement is that the individually coated strands 23 can be coated at the point of manufacture of the KEVLAR fibres and this overcomes many of the problems associated with the absorption of moisture onto or into the KEVLAR fibres themselves. If the coated KEVLAR fibres are not to be immediately braided into the strength member 21, they are placed in hermetically sealed containers for transport to the location where the braiding takes place.

In addition, since the strands 23 are each provided with their own coating 24, it is thought that the member 21 requires no exterior coating as provided for the member 11, thereby creating a resultant saving.

It has been found that the above described arrangement for the tensile load bearing member 21 results in a substantial reduction in the overall self noise level of the acoustic array 1 and hence increases the signal to noise ratio. As a consequence, the acoustic array 1 can be towed at a higher speed and used in a greater variety of operational conditions, thus widening its operational utility.

The foregoing describes only one embodiment of the present invention and modifications, obvious to those skilled in the art, can be made thereto without departing from scope of the present invention.

For example, although the above refers to a plaited or braided member, the invention is equally applicable to rope like members where both the individual filaments or ends and the strands are laid by twisting in accordance with conventional rope-making techniques instead of the strands being plaited or braided.

## Claims

1. An acoustic array (1) adapted to be towed behind a vessel (3), said array comprising a plurality of lines (2) and each of said lines being strengthened by at least one multistrand load carrying member (11) formed from a plurality of strands (23) each of which is composed of Aramid fibres (22) characterised in that each of said strands (23) is individually coated with a layer (24) of vibration damping material before fabrication of the load carrying member.

2. An array as claimed in claim 1 wherin the or each multistrand load carrying member is formed from the individually coated strands by a technique selected from the group consisting of laying as in rope manufacture, braiding and plaiting.

3. An array as claimed in claim 1 or 2 wherein said vibration damping material is selected from the group consisting extrusion grade ethylene vinyl acetate and thermoplastic rubber.

4. A multistrand tensile load carrying member (11) formed from a plurality of strands each of which is composed of Aramid fibres (22) caracterised in that each of said strands (23) is individually coated with a layer (24) of vibration damping material before fabrication of said load carrying member.

5. The member as claimed in claim 4 wherein the individually coated strands (23) are formed into said member (11) by a technique selected from the group consisting of laying as in rope manufacture, braiding and plaiting.

6. The member as claimed in claim 4 or 5 wherin said vibration damping material is selected from the group consisting extrusion grade ethylene vinyl acetate and thermoplastic rubber.

7. A method of reducing transmission of axial mechanical vibrations in a multistrand tensile load bearing member (11), said method comprising the step of individually coating each strand (23) of the member with a coating of high loss tangent material before fabrication of said member, and wherein each said strand (23) is formed from a plurality of Aramid fibres (22).

8. The method a claimed in claim 7 wherein the individually coated strands (23) are formed into said member (11) by a technique selected from the group consisting of laying as in rope manufacture, braiding and plaiting.

9. The method as claimed in any one of claims 7 and 8 wherein said vibration damping material is selected from the group consisting extrusion grade ethylene vinyl acetate and thermoplastic rubber.

## Patentansprüche

1. Akustische Horchanlage (1), die von einem Schiff (3) geschleppt wird und eine Mehrzahl von Leinen (2) besitzt, wobei jede Leine durch mindestens ein mehrere Litzen enthaltendes Zugglied (11) verstärkt ist, das aus einer Mehrzahl von je aus Aramidfasern (22) bestehenden Litzen (23) gebildet wird, dadurch gekennzeichnet, daß jede Litze (23) einzeln mit einer Schicht (24) aus einem vibrationadämpfenden Material vor der Herstellung des Zugglieds umgeben wird.

2. Anlage nach Anspruch 1, in der das oder jedes aus mehreren Litzen bestehende Zugglied aus den einzeln umhüllten Litzen durch eine Technik hergestellt wird, die durch Verseilen oder Flechten gebildet wird.

3. Anlage nach Anspruch 1 oder 2, dadurch gekennzeichnet, daß das vibrationsdämpfende Material aus der Gruppe ausgewählt wird, die extrudiertes Äthylenvinylacetat und thermoplastischen Gummi enthält.

4. Zugglied (11), das aus einer Mehrzahl von Litzen besteht, die je aus Aramidfasern (22) gebildet werden, dadurch gekennzeichnet, daß jede Litze (23) einzeln mit einer Schicht (24) aus vibrationsdämpfendem Material vor der Herstellung des Zugglieds umgeben wurde.

5. Zugglied nach Anspruch 4, wobei die einzeln umhüllten Litzen (23) zu dem Zugglied (11) durch eine Technik geformt werden, die unter den Techniken des Verseilens und Flechtens ausgewählt ist.

6. Zugglied nach Anspruch 4 oder 5, wobei das vibrationsdämpfende Material aus der Gruppe ausgewählt wird, die extrudiertes Äthylenvinylacetat und thermoplastischen Gummi enthält.

7. Verfahren zur Verringerung der Übertragung von axialen mechanischen Vibrationen in einem Zugglied (11) aus mehreren Litzen, wobei das Verfahren den Verfahrensschritt einer Umhüllung jeder einzelnen Litze (23) des Glieds mit einer Schicht aus einem Material großen Verlustwinkels einschließt, ehe das Glied hergestellt wird, und wobei die Litze (23) aus einer Mehrzahl von Aramid-Fasern (22) gebildet wird.

8. Verfahren nach Anspruch 7, wobei die einzeln umhüllten Litzen (23) zu dem Glied (11) durch eine Technik geformt werden, die aus der Gruppe von Techniken ausgewählt wird, welche das Verseilen und das Flechten enthält.

9. Verfahren nach einem der Ansprüche 7 und 8, wobei das vibrationsdämpfende Material aus der Gruppe ausgewählt wird, die von extrudiertem Äthylenvinylacetat und thermoplastischem Gummi gebildet wird.

## Revendications

1. Dispositif acoustique (1) pouvant être remorqué par un navire (3), ledit dispositif comprenant diverses lignes (2), chacune desdites lignes étant renforcée par au moins un élément multibrins de reprise de charge de traction (11), formé de divers brins (23) composés chacun de fibres d'aramide (22), caractérisé en ce que chacun desdits brins (23) est individuellement recouvert, avant fabrication de l'élément de reprise de charge, d'un revêtement (24) constitué d'un matériau atténuant les vibrations.

2. Elément conforme à la revendication 1, caractérisé en ce que le ou chaque élément multibrins de reprise de charge de traction est formé de brins individuellement dotés d'un revêtement par une technique choisie dans le groupe consistant à agencer les fils comme pour la fabrication de cordes, à les tresser et à les torsader.

3. Dispositif conforme à la revendication 1 ou 2, caractérisé en ce que ledit matériau atténuant les vibrations, est choisi parmi le groupe intégrant l'éthylène/acétate de vinyle et le caoutchouc thermoplastique.

4. Elément multibrins de reprise de charge de traction (11) constitué de divers brins, composés chacun de fibres d'aramide (22), caractérisé en ce que chacun desdits brins (23) est individuellement doté, avant fabrication dudit élément de reprise de charge, d'un revêtement (24) constitué d'un matériau atténuant les vibrations.

5. Elément conforme à la revendication 4, caractérisé en ce que les brins individuellement dotés du revêtement (23) sont formés dans lesdits éléments (1) par une technique choisie dans le groupe consistant à poser les brins comme pour la fabrication de corde, à les tresser et à les torsader.

6. Elément conforme à la revendication 4 ou 5, caractérisé en ce que ledit matériau atténuant les vibrations est sélectionné dans le groupe intégrant l'éthylène/acétate de vinyle de classe extrusion, et le caoutchouc thermoplastique.

7. Méthode consistant à réduire la transmission des vibrations mécaniques axiales dans un élément multibrins de reprise de charge de traction (11), ladite méthode consistant à appliquer, avant fabrication dudit élément, un revêtement sur chaque brin (23) de l'élément, ledit revêtement étant composé d'un matériau à tangente de perte élevée, et caractérisé en ce que chaque brin (23) est composé de diverses fibres d'aramide (22).

8. Méthode conforme à la revendication 7 caractérisée en ce les brins individuellement dotés de revêtement(23) sont formés dans ledit élément (11) par une technique choisie dans le groupe consistant à tresser les brins comme pour la fabrication de cordes, à les tresser et à les torsader.

9. Méthode conforme aux revendications 7 et 8, caractérisée en ce que ledit matériau atténuant les vibrations est choisi dans le groupe intégrant léthylène/acétate de vinyle de classe extrusion et le caoutchouc thermoplastique.
